Europäisches Patentamt

European Patent Office

Office européen des brevets

(11) Veröffentlichungsnummer: **0 315 030**

**A1**

(12) **EUROPÄISCHE PATENTANMELDUNG**

(21) Anmeldenummer: **88117773.7**

(22) Anmeldetag: **25.10.88**

(51) Int. Cl.4: **H01S 3/03**

(30) Priorität: **05.11.87 DE 3737626**

(43) Veröffentlichungstag der Anmeldung:
**10.05.89 Patentblatt 89/19**

(84) Benannte Vertragsstaaten:
**DE GB**

(71) Anmelder: **Siemens Aktiengesellschaft Berlin und München**
**Wittelsbacherplatz 2**
**D-8000 München 2(DE)**

(72) Erfinder: **Krüger, Hans, Dipl.-Phys.**
**Peralohstrasse 13**
**D-8000 München 83(DE)**
Erfinder: **Welsch, Wolfgang, Dr.-Ing.**
**Fuchsweg 25b**
**D-8011 Baldham(DE)**

(54) **Laserröhre.**

(57) Eine besonders kostengünstige Laserröhre ist so ausgestaltet, daß die Spiegelhalterung (3, 9) aus einem an den Temperaturausdehnungskoeffizienten des Spiegelmaterials nicht angepaßten Material besteht und daß der Spiegel (6, 8) weich aufgelötet oder mittels eines wenig gasenden Klebers (4) aufgeklebt ist.

Die Erfindung läßt sich vorteilhaft für preisgünstige Gaslaserröhren einsetzen.

FIG 1

## Laserröhre

Die vorliegende Erfindung betrifft eine Laserröhre mit einem Gehäuserohr aus Glas oder Keramik, mit zumindest einer Metallspiegelhalterung und mit integrierten Spiegeln. Eine derartige Laserröhre ist aus der DE-PS 25 06 707 bekannt. Dort werden die Spiegel in Spiegelfassungen eingesetzt und über Glaslot hermetisch dicht verbunden, wobei die Spiegelfassungen in ihrem Temperaturausdehnungskoeffizienten an die Spiegel angepaßt sind. Hierzu ist ein relativ teures Material für die Spiegelfassungen erforderlich und ein komplizierter Aufbau, da ein Übergang von der Spiegelhalterung zur stirnseitigen Abschlußplatte des Lasers gebildet werden muß, wobei die Abschlußplatte in ihrem Temperaturkoeffizienten an das Lasergehäuse angepaßt ist, also aus einem anderen Werkstoff bestehen muß, als die Spiegelfassung.

Die Aufgabe, die der vorliegenden Erfindung zugrundeliegt, besteht in einer Herabsetzung des Aufwandes einer derartigen Spiegelhalterung, ohne eine Verschlechterung der Laserleistung in Kauf nehmen zu müssen.

Diese Aufgabe wird bei einer Laserröhre der oben bechriebenen Art durch die kennzeichnenden Merkmale des Patentanspruchs 1 oder des Patentanspruchs 2 gelöst. Beide Lösungsformen ergeben ausreichend vakuumdichte und dabei elastisch verformbare Verbindungen, die den zu erwartenden Temperaturbeanspruchungen standhalten. Die höchste Temperaturbeanspruchung der entsprechenden Teile tritt erfahrungsgemäß beim Zusammenlöten des Lasers auf. Daher sind die geringen Verbindungstemperaturen der beiden angegebenen Lösungswege besonders vorteilhaft, eine erheblich über den Belastungen im Betriebsfall liegende Temperaturbelastung wird vermieden.

Zum Aufkleben des Spiegels eignet sich insbesondere ein hochgradig mit Silber gefülltes Epoxidharz.

Ein besonders kompakter Aufbau ergibt sich, indem das Laserrohr mit einer Stirnscheibe aus Metall abgeschlossen ist, deren Temperaturausdehnungskoeffizient an den des Gehäuserohrs angepaßt ist und indem ein vollreflektierender Spiegel im Inneren der Laserröhre auf die Stirnscheibe aufgelötet bzw. aufgeklebt ist.

Eine zusätzliche Rationalisierungsmöglichkeit ist gegeben, indem der Spiegel aus einem Mutterspiegel abgetrennt ist. Ein derartiger Spiegel besitzt vorteilhaft eine viereckige Oberfläche. Die viereckige Oberfläche ist vorzugsweise quadratisch. Sie kann aber auch andere Viereckformen besitzen, wie z.B. Rechteckform, Trapezform.

Derartige Laserspiegel werden vorteilhaft durch ein Verfahren mit den folgenden Verfahrensschritten hergestellt:

a) Ein Mutterspiegel mit der Fläche von mehreren Spiegeln wird mit Fotolack beschichtet,

b) der Fotolack wird gehärtet,

c) der Mutterspiegel wird in Spiegel zersägt, wobei die Schnittkanten gleichzeitig mit einer Fase versehen werden,

d) die Laserspiegel werden gereinigt,

e) der Fotolack wird in einer Plasmaveraschungsanlage rückstandfrei entfernt.

Eine Plasmaveraschungsanlage enthält eine Hochfrequenzkammer mit einer Hochfrequenzspule, durch die in einer Sauerstoffatmosphäre ein Ionenplasma erzeugt wird, welches dann den Fotolack rückstandfrei verbrennt.

Ebenfalls vorteilhaft ist ein Verfahren, bei dem der Mutterspiegel nicht zersägt, sondern geritzt und gebrochen wird und die Kanten der Spiegel mittels Flußsäure verrundet werden, wobei die übrigen Verfahrensschritte des oben genannten Verfahrens beibehalten werden.

Eine vorteilhafte Methode zur Justierung der Spiegel einer Laserröhre mit 2 integrierten Spiegeln besteht darin, daß nach dem Zusammenbau in die Laserröhre ein Meßstrahl mit einer Wellenlänge eingestrahlt wird, welche von den Spiegeln nur teilweise reflektiert wird und daß nach den Reflexionen des Meßstrahles an den Spiegeloberflächen die beiden Spiegel justiert werden. Dabei wird vorteilhaft zur Justierung eines roten Helium-Neon-Lasers der Strahl eines grünen Helium-Neon-Lasers eingesetzt. Dieses Verfahren eignet sich insbesondere zur Justierung in den Fällen, in denen ein Spiegel auf eine Metallplatte aufgeklebt ist, da in diesen Fällen der Meßstrahl nur von einer Seite in den Laser eingestrahlt werden kann und da ein von den Spiegeln voll reflektierter Meßstrahl durch den ersten Spiegel kaum nennenswert hindurchtreten würde, so daß die Justierung des zweiten, von außen nicht sichtbaren Spiegels praktisch nicht mehr möglich wäre.

Die Erfindung wird nun anhand von drei Figuren näher erläutert. Sie ist nicht auf die in den Figuren gezeigten Beispiele beschränkt.

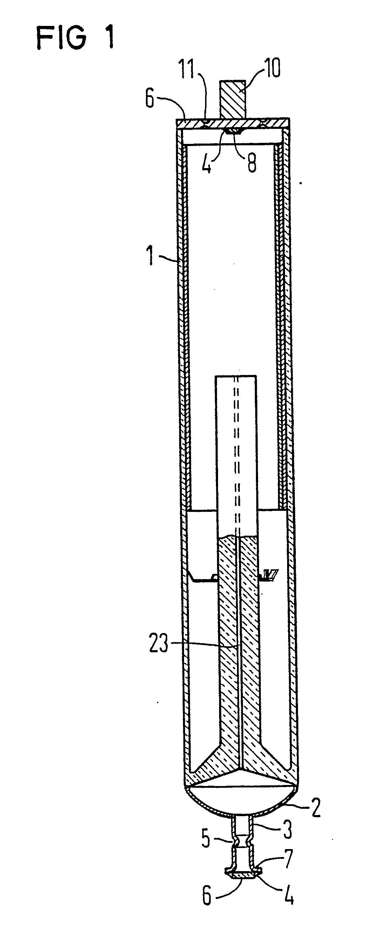

Fig. 1 zeigt eine erfindungsgemäße Laserröhre in geschnittener Ansicht. Die

Fig. 2 und 3 zeigen weitere Beispiele für die Befestigungsmöglichkeit der Laserspiegel om geschnittener und gebrochener Ansicht.

Ein Gehäuserohr 1 aus Glas oder Keramik ist auf einer Seite mit einer Metallkappe 2 abgeschlossen. Die Metallkappe 2 weist denselben Temperaturausdehnungskoeffizienten auf wie das Laserrohr

In Richtung des Laserstrahles ist in die Metallkappe 2 ein Rohr 3 eingesetzt, welches aus einem billigen Werkstoff besteht. Als Werkstoffe eignen sich beispielsweise Kupfer oder Stahl. Das Rohr 3 ist an dem von der Metallkappe 2 abgewandten Ende flanschartig aufgeweitet und dient als Spiegelhalterung für den Spiegel 6. Der Spiegel 6 ist mittels eines Klebers 4 oder eines Lotes mit dem Rohr 3 vakuumdicht verbunden. Als Kleber 4 eignen sich wenig gasende Kleber, vorzugsweise hochgradig mit Silber gefüllte Epoxidharze. Ein derartiger Kleber weist auch eine hohe Wärmeleitfähigkeit auf und ermöglicht somit den Wärmeübergang vom Spiegel zum Flansch 7 des Rohres 3. Die Neigung des Spiegels 6 kann durch eine Verformung des Rohres 3 in der Sicke 5 justiert werden. Auf der gegenüberliegenden Seite des Gehäuserohres 1 dient als Spiegelhalterung eine Stirnplatte 9, auf die ein Spiegel 8 ebenfalls mittels eines Klebers 4 aufgeklebt ist. Die Stirnplatte 9 besteht aus einem Material, dessen Temperaturausdehnungskoeffizient an den des Gehäuserohres 1 angepaßt ist. Der Kleber 4 weist genügend Elastizität auf, so daß der Spiegel 8 sich auch bei den zu erwartenden Temperaturschwankungen nicht löst oder verformt. Dies wird auch durch die Unterstützung des Spiegels 8 auf der Metallplatte begünstigt, wodurch der Spiegel 8 einerseits sehr dünn gehalten werden kann, da er dem Vakuumdruck nicht ausgesetzt ist, und andererseits eine sehr kleine Fläche aufweisen darf, die nur dem Strahldurchmesser zu entsprechen braucht. Je dünner und kleinflächiger der Spiegel gestaltet wird, um so besser ist die Wärmeabfuhr über den gut wärmeleitenden Kleber 4 auf die Stirnplatte 9 und umso geringer die Verspannung bei Temperaturschwankungen. Die Verbindung zwischen der Stirnplatte 9 und dem Gehäuserohr 1 kann dabei ebenfalls durch einen Kleber der beschriebenen Art gebildet sein, sie kann aber auch mittels Weichlottechnik durchgeführt sein. In beiden Fällen wird die Temperaturbelastung des Klebers 4 am Spiegel 8 ausreichend gering gehalten.

Der Spiegel 8 läßt sich auf der Stirnplatte 9 präzise parallel liegend aufbringen, so daß es im allgemeinen genügt, die Stirnplatte 9 zum Entladungskanal 23 exakt senkrecht auszurichten. Für eine zusätzliche nachträgliche Korrektur der Spiegellage ist ein Justierbolzen 10 angebracht, welcher eine geringfügige Verbiegung der Stirnplatte 9 ermöglicht. Bei Bedarf kann zur besseren Verbiegbarkeit der Stirnplatte 9 der Justierbolzen 10 von einer ringförmigen Zone 11 mit geringer Wandstärke umgeben sein.

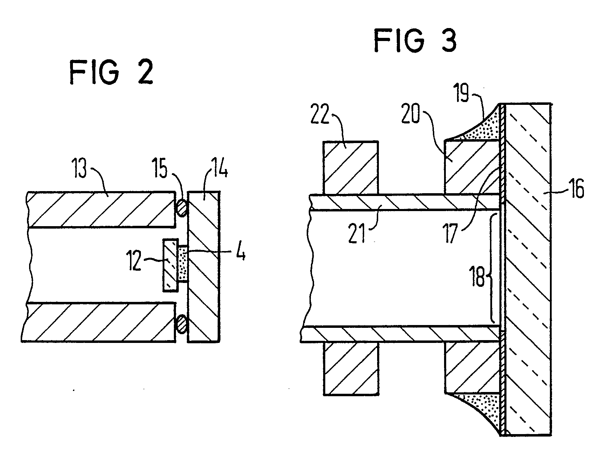

Fig. 2 zeigt eine Befestigung eines Spiegels 12 mittels eines Klebers 4 auf einer Metallplatte 14, wobei die Metallplatte 14 mittels eines Lotringes 15 mit einem Metallrohr 13 verlötet ist. Diese Ausführungsform ermöglicht die Verwendung von besonders kleinen Spiegeln in Verbindung mit einer Spiegelhalterung üblicher Bauart. Sie beinhaltet ebenfalls den Vorteil, daß das Metallrohr 13 und die Metallplatte 14 aus billigem Material hergestellt werden können. Die Klebestelle am Spiegel 12 ist hier besonders kleinflächig, sodaß die restlichen Verspannungen besonders gering gehalten werden.

Fig. 3 zeigt eine Ausführungsform, bei der ein Spiegel 16 mit einer lötfähigen Metallschicht 17 beschichtet ist, wobei die Metallschicht 17 einen Strahldurchtrittsbereich 18 freiläßt. Die Metallschicht 17 ist über ein Lot 19 mit einem Ring 20 aus Metall verlötet. Der Ring 20 sitzt fest auf einem relativ dünnen Metallrohr 21. Ein weiterer Ring 22 ist in geringem Abstand auf dem Metallrohr 21 befestigt. Die Ringe 20 und 22 können vorteilhafterweise auf das Metallrohr 21 aufgelötet sein; in vielen Fällen reicht jedoch ein Aufpressen der Ringe 20, 22 auf das Metallrohr 21 aus. Dabei bestehen vorteilhaft die Ringe 20 und 22 und das Metallrohr aus Kupfer. Dieser Werkstoff läßt sich gut löten und ist duktil, so daß eine Verbiegung des Rohres 21 im Bereich zwischen den beiden Ringen 20 und 22 zur Justierung des Spiegels ohne Schwierigkeiten möglich ist. Diese Ausführungsform läßt eine besonders kleine Dimensionierung der Halterung zu. In einer weiteren Ausbildung der Erfindung kann der Ring 20 mit dem Rohr 21 einstückig verbunden sein. In diesem Fall empfiehlt es sich, dieses kombinierte Teil durch einen Fließpreßprozeß herzustellen.

## Ansprüche

1. Laserröhre mit einem Gehäuserohr aus glasartigen oder keramischen Werkstoffen, mit zumindest einer metallischen Spiegelhalterung und einem integrierten Spiegel,
**dadurch gekennzeichnet,**
daß die metallische Spiegelhalterung aus einem kostengünstigen, an den Temperaturausdehnungskoeffizienten des Spiegelmateriales nicht angepaßten Material besteht und daß der Spiegel zumindest einen lötbaren Bereich aufweist und mittels Weichlot auf die Spiegelhalterung aufgelötet ist.

2. Laserröhre mit einem Gehäuserohr aus einem glasartigen oder keramischen Werkstoff mit zumindest einer metallischen Spiegelhalterung und einem integrierten Spiegel,
**dadurch gekennzeichnet,**
daß die metallische Spiegelhalterung aus einem kostengünstigen, an den Temperaturausdehnungskoeffizienten des Spiegelmaterials nicht angepaßten Material besteht und daß der Spiegel mittels eines wenig gasenden Klebers aufgeklebt ist.

3. Laserröhre nach Anspruch 2,
**dadurch gekennzeichnet,**
daß der Spiegel mittels eines hochgradig mit Silber gefüllten Epoxidharzklebers aufgeklebt ist.

4. Laserröhre nach einem der Ansprüche 1 oder 2,
**dadurch gekennzeichnet,**
daß das Gehäuserohr mit einer Stirnscheibe aus Metall abgeschlossen ist, deren Temperaturausdehnungskoeffizient an den des Gehäuserohres angepaßt ist und daß ein vollreflektierender Spiegel im Inneren der Laserröhre auf diese Stirnscheibe aufgelötet bzw. aufgeklebt ist.

5. Laserröhre nach einem der Ansprüche 1 bis 4,
**dadurch gekennzeichnet,**
daß der Spiegel aus einem Mutterspiegel abgetrennt ist.

6. Laserröhre nach Anspruch 5,
**dadurch gekennzeichnet,**
daß der Spiegel eine viereckige Oberfläche besitzt.

7. Verfahren zur Herstellung von Spiegeln insbesondere zur Verwendung gemäß einem der Ansprüche 1 bis 6,
**gekennzeichnet durch**
die folgenden Merkmale:

a) Ein Mutterspiegel mit der Fläche von mehreren Spiegeln wird mit Fotolack beschichtet.

b) Der Fotolack wird gehärtet.

c) Der Mutterspiegel wird in Spiegel zersägt, wobei die Schnittkanten mit einer Fassette versehen werden.

d) Die Spiegel werden gereinigt.

e) Der Fotolack wird in einer Plasmaveraschungsanlage rückstandfrei entfernt.

8. Verfahren zur Herstellung von Laserspiegeln insbesondere zur Verwendung gemäß einem der Ansprüche 1 bis 6,
**gekennzeichnet durch**
die folgenden Merkmale:

a) Ein Mutterspiegel mit der Fläche von mehreren Spiegeln wird mit Fotolack beschichtet.

b) Der Fotolack wird gehärtet.

c) Der Mutterspiegel wird in Spiegel zertrennt, indem er geritzt und gebrochen wird.

d) Die Kanten der Spiegel werden mittels Flußsäure verrundet.

e) Die Spiegel werden gereinigt.

f) Der Fotolack wird in einer Plasmaveraschungsanlage rückstandfrei entfernt.

9. Verfahren zur Justierung der Spiegel einer Laserröhre mit zwei Spiegeln gemäß den Ansprüchen 1 bis 6,
**dadurch gekennzeichnet,**
daß nach dem Zusammenbau in die Laserröhre ein Meßstrahl mit einer Wellenlänge eingestrahlt wird, welche von den Spiegeln nur teilweise reflektiert wird und daß nach den Reflexionen des Meßstrahles an den Spiegeloberflächen die beiden Spiegel justiert werden.

10. Verfahren nach Anspruch 9,
**dadurch gekennzeichnet,**
daß zur Justierung eines roten HeNe-Lasers mit Interferenzspiegeln der Strahl eines grünen HeNe-Lasers eingesetzt wird.

# FIG 1

FIG 2

FIG 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-4 250 467 (KUBOTA et al.) * Figuren 3,4; Spalte 1, Zeile 40 - Spalte 2, Zeile 5, Spalte 4, Zeilen 36-41; Ansprüche 1-3 * --- | 1-4 | H 01 S 3/03 |
| A | US-A-3 851 275 (T. FURUSE et al.) * Figuren 1-3; Spalte 2, Zeilen 39-61; Spalte 5, Zeilen 25,31 * --- | 1,2 | |
| A | US-A-4 216 438 (SEKI et al.) * Figuren 3,4; Anspruch 1 * --- | 1 | |
| A | US-A-3 790 900 (GOLSER) * Spalte 4, Zeilen 3-11 * --- | 9 | |
| A | US-A-3 857 161 (HUTCHINS IV) * Figuren 1-3; Spalte 2, Zeilen 26-36 * --- | 1 | |
| D,A | US-A-4 081 762 (GOLSER et al.) * Anspruch 1; Figuren 1,3 * ----- | | |

RECHERCHIERTE SACHGEBIETE (Int. Cl.4)

H 01 S

Der vorliegende Recherchenbericht wurde für alle Patentansprüche erstellt

| Recherchenort | Abschlußdatum der Recherche | Prüfer |
|---|---|---|
| DEN HAAG | 09-01-1989 | FARNESE G.P. |